# EUROPEAN PATENT APPLICATION

(11) **EP 2 670 077 A1**
(43) Date of publication of application: **04.12.2013**
(21) Application number: 12738936.9
(22) Date of filing: 06.01.2012
(51) Int. Cl.: H04L 1/18, H04L 1/16

(54) **METHOD AND APPARATUS FOR DATA PACKET RETRANSMISSION**

(30) Priority: 25.01.2011 CN 201110029844
(71) Applicant: Huawei Technologies Co., Ltd., Shenzhen, Guangdong 518129 (CN)
(72) Inventor: QUAN, Wei, Guangdong 518129 (CN); JIANG, Yi, Guangdong 518129 (CN)
(74) Representative: Pfenning, Meinig & Partner GbR
(86) International application number: PCT/CN2012/070113
(87) International publication number: WO 2012/100670

(57) **Abstract**

Embodiments of the present invention relate to a method and an apparatus for retransmitting a data packet. The method for retransmitting a data packet includes that: a transmitter transmits a data packet; when the transmitter determines that transmission of the data packet is completed, and there is no data packet to be transmitted or a transmitting window is unable to transmit a data packet to be transmitted, the transmitter instructs a media access control entity to feed back whether the transmission of the data packet fails through a local negative acknowledgement mode; and if the transmitter receives that the media access control entity feeds back that the transmission of the data packet fails through the local negative acknowledgement mode, the transmitter retransmits the data packet. According to the method and apparatus for retransmitting a data packet provided in embodiments of the present invention, when the transmission of the data packet is completed, and there is no data packet to be transmitted or the transmitting window is unable to transmit a data packet to be transmitted, the local negative acknowledgement mode is applied to the data packet, thereby not only avoiding transmission delay of the data packet, but also avoiding the repeatedly retransmitting the data packet.

## Description

This application claims priority to Chinese Patent Application No. 201110029844.5, filed with the Chinese Patent Office on January 25, 2011 and entitled "METHOD AND APPARATUS FOR RETRANSMITTING DATA PACKET", which is incorporated herein by reference in its entirety.

### TECHNICAL FIELD

The present invention relates to the field of radio communication technologies and, in particular, to a method and an apparatus for retransmitting a data packet.

### BACKGROUND

The present invention relates to the field of communications technologies, and in particular, to a method and an apparatus for retransmitting a data packet.

### BACKGROUND

In an existing LTE (Long Term Evolution, long term evolution) system, a set of ARQ (Automatic Repeat reQuest, automatic repeat request) modes can be defined at a RLC (Radio Link Control, radio link control) layer for an SRB (Signalling Radio Bearer, signaling radio bearer) or a DRB (Data Radio Bearer, data radio bearer) that is configured as an AM (Acknowledged Mode, acknowledged mode) so as to improve reliability of data transmission, and the set of ARQ modes is used for retransmitting a data packet.

If transmission of a last RLC data packet transmitted by a transmitter fails, because there is no other RLC data packet to be transmitted, a poll (Poll) bit cannot be carried by a following RLC data packet to trigger a receiver to send a status report in time. Instead, the transmitter may retransmit the RLC data packet so as to send a new poll bit to the receiver to request a status report from the receiver only when a T-PollRetransmit (a poll retransmission timer) expires, thereby causing transmission delay of the last RLC data packet.

### SUMMARY

Embodiments of the present invention provide a method and an apparatus for retransmitting a data packet so as to avoid data packet transmission delay.

In one aspect, a method for retransmitting a data packet is provided, including:
sending, by a transmitter, a data packet;
when the transmitter determines that transmission of the data packet is completed, and there is no data packet to be transmitted or a transmitting window is unable to transmit a data packet to be transmitted, instructing, by the transmitter, a media access control entity to feed back whether the transmission of the data packet fails through a local negative acknowledgement mode; and
if the transmitter receives that the media access control entity feeds back that the transmission the data packet fails through the local negative acknowledgement mode, retransmitting, by the transmitter, the data packet.

In another aspect, an apparatus for retransmitting a data packet is provided, including:
a transmitting unit, configured to transmit a data packet; and
an instructing unit, configured to instruct, when the transmitter determines that the transmitting unit completes transmission of the data packet, and there is no data packet to be transmitted or a transmitting window is unable to transmit a data packet to be transmitted, a media access control entity to feed back whether the transmission of the data packet fails through a local negative acknowledgement mode; where
the transmitting unit is further configured to retransmit the data packet when receiving that the media access control entity instructed by the instructing unit feeds back that the transmission of the data packet fails.

When a transmitter determines that transmission of a data packet is completed, and there is no data packet to be transmitted or the transmitting window is unable to transmit a data packet to be transmitted, the transmitter instructs the media access control entity to feed back whether the data packet transmission fails through a local negative acknowledgement mode. If the transmitter receives that the media access control entity feeds back that the transmission of the data packet fails through the local negative acknowledgement mode, the transmitter retransmits the data packet, thereby not only avoiding the data packet transmission delay, but also avoiding repeatedly retransmitting the data packet caused by applying the Local NACK mode to all data packets.

### BRIEF DESCRIPTION OF THE DRAWINGS

To describe the technical solutions in embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from the accompanying drawings without creative efforts.
FIG. 1 is a schematic flowchart of a method for retransmitting a data packet according to an embodiment of the present invention;
FIG. 2 is a first schematic structural diagram of an apparatus for retransmitting a data packet according to an embodiment of the present invention;
FIG. 3 is a second schematic structural diagram of an apparatus for retransmitting a data packet according to an embodiment of the present invention;
FIG. 4 is a schematic flowchart of a method for retransmitting a data packet in one application scenario according to an embodiment of the present invention;
FIG. 5 is a schematic flowchart of a method for retransmitting a data packet in another application scenario according to an embodiment of the present invention; and
FIG. 6 is a schematic flowchart of a method for retransmitting a data packet in yet another application scenario according to an embodiment of the present invention.

### DETAILED DESCRIPTION OF THE EMBODIMENTS

The technical solutions in embodiments of the present invention are hereinafter described clearly and completely with reference to the accompanying drawings. Apparently, the described embodiments are only some exemplary embodiments of the present invention, rather than all embodiments of the present invention. Based on embodiments of the present invention, all other embodiments obtained by persons of ordinary skill in the art without making any creative effort shall fall within the protection scope of the present invention. An AM SRB or an AM DRB corresponds to a RLC AM entity. The RLC AM entity includes a transmitter and a peer receiver. A receiver is triggered to send a status report in a manner that a transmitter of the RLC AM entity carries a poll bit in a transmitted RLC data packet (which may be an initially-transmitted data packet, a retransmitted data packet, or a segment of a retransmitted data packet), so as to instruct the transmitter to retransmit a data packet which is transmitted unsuccessfully.

If transmission of a last RLC data packet transmitted by the transmitter fails, because there is no other RLC data packets to be transmitted, a poll bit cannot be carried by other RLC data packets to trigger the receiver to send a status report in time. Instead, the transmitter can retransmit the RLC data packet for sending a new poll bit to the receiver to request the receiver to feed back a status report only when a T-PollRetransmit expires, thereby causing transmission delay of the last RLC data packet.

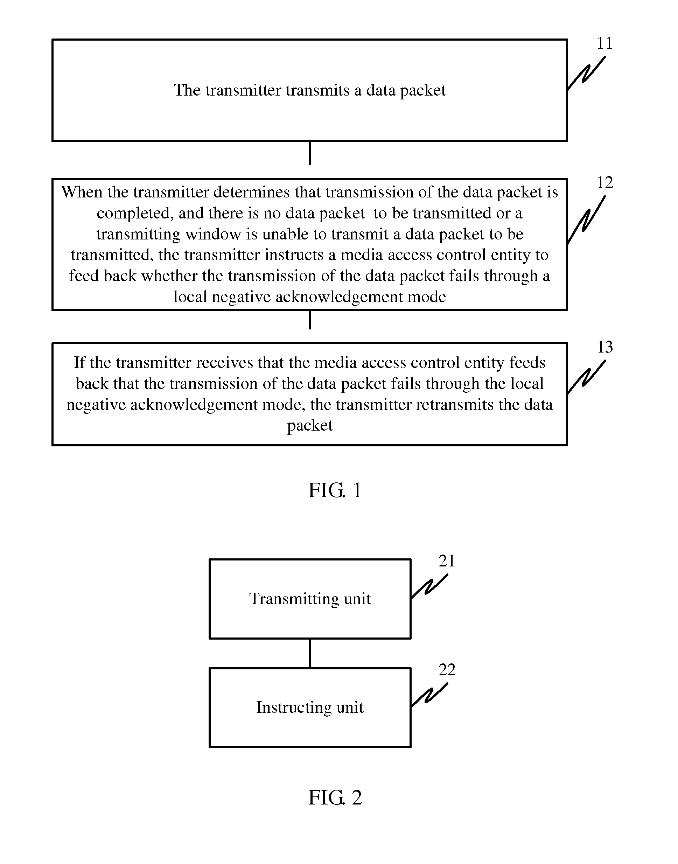

As shown in FIG. 1, an embodiment of the present invention provides a method for retransmitting a data packet. The method includes the following steps:
Step 11: A transmitter sends a data packet.
Step 12: When the transmitter determines that transmission of the data packet is completed, and there is no data packet to be transmitted or a transmitting window is unable to transmit a data packet to be transmitted, the transmitter instructs a media access control entity to feed back whether the transmission of the data packet fails through a local negative acknowledgement mode.
Step 13: If the transmitter receives that the media access control entity feeds back that the transmission of the data packet fails through the local negative acknowledgement mode, the transmitter retransmits the data packet.

The entity implementing the method for retransmitting a data packet provided in the embodiment of the present invention may be the transmitter of a RLC AM entity corresponding to an AM SRB or an AM DRB. An RLC AM entity may include a transmitter and a peer receiver. The transmitter maintains a transmitting window which is used for controlling transmission and retransmission of a data packet. The receiver maintains a receiving window which is used for feedback and sequential delivery of a data packet.

The method for retransmitting a data packet provided in the embodiment of the present invention may apply to a UE (User Equipment, user equipment) or an eNodeB (Evolution NodeB, evolution NodeB).

It can be seen from the technical solution according to the embodiment of the present invention that, in an AM of an SRB or a DRB, when transmission of the data packet is completed, and there is no data packet to be transmitted or the transmitting window is unable to transmit a data packet to be transmitted, a Local NACK (local negative acknowledgement) mode is applied to data packets, thereby not only avoiding transmission delay of the data packet, but also avoiding the repeatedly retransmitting the data packet caused by applying the local NACK mode to all data packets.

Specifically, in step 11, the data packet transmitted by the transmitter may include an initially-transmitted AMD PDU (AM Data, AM data; Protocol Data Unit, protocol data unit), a retransmitted AMD PDU, or a segment of a retransmitted AMD PDU. Hereinafter, the initially-transmitted AMD PDU, the retransmitted AMD PDU, and the segment of the retransmitted PDU are uniformly called a RLC data packet. Specifically, a RLC data packet is a RLC PDU from the MAC layer viewpoint. The RLC data packet or RLC PDU mentioned below may be an initially-transmitted AMD PDU, a retransmitted AMD PDU, or a segment of a retransmitted AMD PDU.

Specifically, in step 12, the transmitter determines that transmission of the data packet is completed, and there is no data packet to be transmitted may include:
transmission of the data packet is completed, a Transmission Buffer (an initial transmission buffer) and a Retransmission Buffer (a retransmission buffer) are empty, where The retransmission buffer does not include a data packet that has been transmitted and is waiting for acknowledgement of the ARQ mode, that is, the transmitted data packet is the last data packet to be transmitted.

Alternatively, in step 12, the transmitter determines that transmission of the data packet is completed, and there is no data packet to be transmitted may include:
transmission of the data packet is completed, a new data packet is unable to be sent because of a transmitting window restriction of the transmitter.

Therefore, when any of the preceding cases exists, the transmitter may instruct a MAC (Media Access Control, media access control) entity to feed back whether the transmission of the data packet fails through the local NACK mode.

Illustratively, the following briefly describes the local NACK mode:
A MAC entity transmits a RLC data packet which is delivered from the transmitter of a RLC AM entity by using a HARQ (Hybrid Automatic Repeat Request, hybrid automatic repeat request) mode. If the transmission of the RLC data packet still fails when the maximum HARQ retransmission times is reached, the MAC entity will instruct the transmitter of the RLC AM entity that the transmission of the RLC data packet fails. Therefore, the transmitter of the RLC AM entity quickly retransmits the corresponding RLC data packet by receiving a Local NACK indication from the MAC entity, so as to reduce the retransmission delay.

Therefore, in step 12, the transmitter of the RLC AM entity instructs the MAC entity to feed back whether the transmission of the current RLC data packet fails through the local NACK mode only when determining that the transmission of the RLC data packet is completed and there is no RLC data packet to be transmitted or the transmitting window is unable to transmit the RLC data packet to be transmitted.

Further, in step 13, the transmitter may retransmit the data packet when the transmitter receives that the MAC entity feeds back that the transmission of the data packet fails.

That is, the transmitter of the RLC AM entity instructs the MAC entity to apply the local NACK mode to a specific RLC data packet rather than all RLC data packets, thereby avoiding the repeatedly retransmitting the data packet caused by the double effects of the local NACK mode applied to all RLC data packets and the status report transmitted by the receiver in an AM mode.

Optionally, if the transmitter instructs the media access control entity to feed back that the transmission of the data packet fails through a local negative acknowledgement mode, the method for retransmitting a data packet provided in the embodiment of the present invention may further include:
judging, by the transmitter, whether there is a data packet to be transmitted or whether the transmitting window resumes transmission of a data packet to be transmitted.

If there is no data packet to be transmitted or the transmitting window does not resume transmission of a data packet to be transmitted, the transmitter determines that the sequence number of the data packet cycles between 0 and X, and when VT(A) is smaller than VT(S), and if the sequence number of the data packet is smaller than VT(S) and is equal to or greater than VT(A), the transmitter retransmits the data packet; when VT(A) is greater than VT(S), and if the sequence number of the data is smaller than X + 1 and is equal to or greater than VT(A) or the sequence number of the data packet is smaller than VT(S) and is equal to or greater than 0, the transmitter retransmits the data packet.

VT(S) is a sending state variable of the transmitter (Variable Transmission (Send state variable)), and VT(A) is an acknowledgement state variable of the transmitter (Variable Transmission (Acknowledgement state variable)).

Specifically, the SN (Sequence Number, sequence number) of a data packet cycles from 0 to X, illustratively, the SN of a data package cycles from 0 to X, that is, X = 1023.

When VT(A) < VT(S), and if the SN of the data packet is smaller than VT(S) and is equal to or greater than VT(A), that is, VT(A) <= SN < VT(S), the transmitter retransmits the data packet.

When VT(A) > VT(S), and if the SN of the data packet is smaller than X + 1 and is equal to or greater than VT(A), or the SN of the data packet is smaller than VT(S) and is equal to or greater than 0, that is, VT(A) <= SN < 1024 || 0 <= SN < VT(S), the transmitter retransmits the data packet.

VT(A) is the lower limit of a transmitting window and specifies the SN of a next RLC PDU for which an ACK (Acknowledgement, acknowledgement) is expected to be received. VT(S) represents the SN of a next initially-transmitted RLC PDU to be transmitted in the transmitting window.

Specifically, the determining, by the transmitter, that there is a data packet to be transmitted or the transmitting window resumes transmission of a data packet to be transmitted may include:
a new data packet from the upper layer reaching the transmitter of the radio link control acknowledgement mode entity and being added to the initial transmission buffer;
or, a data packet, which has been transmitted by the transmitter of the radio link control acknowledgement mode entity and of which a NACK feedback is received, being added to the retransmission buffer;
or, an initially-transmitted data packet free from the restriction of the transmitting window after the transmitter of the radio link control acknowledgement mode entity receives a feedback from the receiver.

For a SRB, the upper layer refers to the RRC (Radio Resource Control, radio resource control) layer; for a DRB, the upper layer refers to the PDCP (Packet Data Convergence Protocol, packet data convergence protocol) layer.

Therefore, the method for retransmitting a data packet according to the embodiment of the present invention avoids repeatedly retransmitting a data packet caused by applying the local NACK mode to RLC data packets when there is a data packet to be transmitted or the transmitting window resumes transmission of a data packet to be transmitted.

Before step 11, the method for retransmitting a data packet provided in the embodiment of the present invention may further include:
receiving a RRC (Radio Resource Control, radio resource control) message, where the RRC message carries an indication of whether a first condition is supported.

The indication of whether the first condition is supported may include:
an indication of configuring whether a signaling radio bearer and/or a data radio bearer supports the first condition. The signaling radio bearer and/or the data radio bearer are an acknowledged mode. The first condition includes: when the transmission of the data packet is completed, and there is no data packet to be transmitted or a transmitting window is unable to transmit a data packet to be transmitted, instructing, by the transmitter, the media access control entity to feed back whether the transmission of the data packet transmission fails through a local negative acknowledgement mode.

Illustratively, in the method for retransmitting a data packet according to the embodiment of the present invention, a RB (bearer) refers to a bearer configured as the AM. When the RB is applied to the UE side:
an eNodeB may configure an indication of whether a RB supports the first condition through a RRC message to indicate whether each RB supports the first condition.

RBs may include a SRB and/or a DRB. That is, an indication of whether the first condition is supported may be configured for the SRB and the DRB, or an indication of whether the first condition is supported may be configured for the SRB or the DRB.

Or, an eNodeB may configure an indication of whether the first condition is supported for a UE through a RRC message. If the indication of whether the first condition is supported is configured for the UE, the indication of whether the first condition is supported is configured for all RBs of the UE. RBs may include SRBs and DRBs.

Or, it is unnecessary to perform the above configuration through a RRC message; instead, a protocol specifies whether the first condition is supported. The protocols may include the RLC protocol and MAC protocol.

Specifically, optionally, the RRC message used for configuring the indication of whether the first condition is supported may include:
a RRC Connection Setup (RRC connection setup) message, or a RRC Connection Reconfiguration (RRC connection reconfiguration) message, or a RRC Connection Reestablishment (RRC connection reestablishment) message.

Optionally, the indication of whether the first condition is supported may be configured by using an existing parameter in the above messages, or a newly-added parameter, or a certain field in the existing parameter, or other manners.

Illustratively, when the method for retransmitting the data packet according to the embodiment of the present invention is applied to the eNodeB side, the eNodeB does not need to inform the UE to configure the indication of whether the first condition is supported.

Therefore, after an indication of whether the first condition is supported is configured for a RB or a UE, when the transmission of the data packet is completed, and there is no data packet to be transmitted or the transmitting window is unable to transmit a data packet to be transmitted, the transmitter of the RLC AM entity may instruct the MAC entity to feed back whether the transmission of the data packet fails through a local NACK mode.

Optionally, if the RRC message carries an indication of supporting a first condition, the method for retransmitting a data packet provided in the embodiment of the present invention may further include:
receiving an indication from an upper layer, and determining, according to the indication of the upper layer, whether to execute the first condition, where the upper layer includes a radio resource control layer or a packet data convergence protocol layer.

For a SRB, the upper layer refers to the RRC layer; for a DRB, the upper layer refers to the PDCP layer.

Illustratively, if the upper layer indicates that an upper-layer data packet (namely, a RLC SDU (Service Data Unit, service data unit)) applies the local NACK mode, the transmitter of the RLC AM entity instructs the MAC entity to feed back whether the transmission fails through a local NACK when the transmitter of the RLC AM entity determines that the transmission of the data packet is completed and there is no data packet to be transmitted or the transmitting window is unable to transmit a data packet to be transmitted, where the current data packet is a RLC PDU containing all or partial data of the RLC SDU,.

If the upper layer indicates that an upper-layer data packet (namely, a RLC SDU) does not apply a local NACK mode, the transmitter of the RLC AM entity does not instruct an MAC entity to feed back whether the transmission of the RLC PDU fails through a local NACK even though the transmitter of the RLC AM entity determines that the transmission of the data packet is completed and there no data packet to be transmitted or the transmitting window is unable to transmit a data packet to be transmitted.

Therefore, even though a RB or a UE is configured with an indication of supporting the first condition, the transmitter of the RLC AM entity needs to determine, according to the indication of the upper layer, whether to execute the first condition.

Optionally, the received RRC message may further carry an indication of whether a second condition is supported. The second condition is to determine, according to the indication of the upper layer, whether to execute the first condition. The upper layer may include the RRC layer or the PDCP layer.

For a SRB, the upper layer refers to the RRC layer; for a DRB, the upper layer refers to the PDCP layer.

Illustratively, in the method for retransmitting a data packet according to embodiments of the present invention, a RB refers to an AM bearer. When the method is applied to the UE side:
an eNodeB may configure an indication of whether a RB supports the second condition through a RRC message, that is, whether to execute the first condition is determined according to the indication of the upper layer.

RBs may include SRBs and/or DRBs. That is, the indication of whether the second condition is supported may be configured for the SRB and the DRB, or the indication of whether the second condition is supported may be configured to the SRB or the DRB.

Alternatively, an eNodeB may configure the indication of whether the second condition is supported for a UE through a RRC message, that is, whether it is determined according to an indication of the upper layer whether to execute the first condition. If the indication of whether the second condition is supported is configured for a UE, each RB of the UE is configured with the indication of whether the second condition is supported. RBs may include SRBs and DRBs.

Or, it is unnecessary to perform the above configuration through the RRC message; instead, a protocol specifies whether the second condition is supported. The protocols may include the RLC protocol and MAC protocol.

The RRC message used for configuring the indication of whether the second condition is supported may include:
a RRC Connection Setup message, or a RRC Connection Reconfiguration message, or a RRC Connection Reestablishment message. Details are not provided here any further.

Illustratively, when the method for retransmitting a data packet according to embodiments of the present invention is applied to the eNodeB side, the eNodeB does not need to inform the UE to configure the indication of whether the second condition is supported.

That is, whether determining, according to the indication of the upper layer, whether to execute a first condition is supported also needs to be configured through the RRC message. The configuration manner is the same as the manner of configuring the indication of whether the first condition is supported through the RRC message.

The above technical solution provided in embodiments of the present invention is particularly suitable for a service requiring transmitting a small data packet. The small data packet of these services has the characteristics of small data amount and a long interval between packets, such as a Heart beat (heart beat) data packet. Because the data amount is small, these small data packets are usually encapsulated into one RLC data packet at the RLC layer. Because the interval between data packets is long, this RLC data packet is always the last data packet to be transmitted. Once this packet is lost, the retransmission of this RLC data packet is triggered until the T-PollRetransmit expires, which causes large transmission delay.

As shown in FIG. 2, corresponding to the method for retransmitting a data packet according to the above embodiments, an apparatus for data packet retransmission is provided in another embodiment of the present invention. The apparatus includes:
a transmitting unit 21, configured to transmit data packets; and
an instructing unit 22, configured to instruct, when determining that the transmitting unit 21 completes transmission of the data packet, and there is no data packet to be transmitted or a transmitting window is unable to transmit a data packet to be transmitted, a media access control entity to feed back whether the transmission of the data packet fails through a local negative acknowledgement mode.

The transmitting unit 21 is further configured to retransmit, when receiving that the media access control entity instructed by the instructing unit 22 feeds back that the transmission of the data packet fails, the data packet.

It can be seen from the technical solution according to the embodiment of the present invention, in an AM of an SRB or an AM DRB, when transmission of the data packet is completed, and there is no data packet to be transmitted or the transmitting window is unable to transmit a data packet to be transmitted, a local NACK mode is applied to data packets, thereby not only avoiding transmission delay of the data packet, but also avoiding the repeatedly retransmitting the data packet caused by applying the local NACK mode to all data packets.

The apparatus for retransmitting a data packet according to the embodiment of the present invention may be configured in the transmitter of a RLC AM entity. Or, the apparatus for retransmitting a data packet according to the embodiment of the present invention may be configured in a UE or an eNodeB.

For facilitating description, in the following, the apparatus for retransmitting a data packet according to the embodiment of the present invention is configured in the transmitter of a RLC AM entity is described as an example.

Specifically, data packets transmitted by the transmitter of a RLC AM entity may include an initially-transmitted AMD PDU, a retransmitted AMD PDU, or a segment of a retransmitted AMD PDU. Hereinafter, the initially-transmitted AMD PDU, the retransmitted AMD PDU, and the segment of the retransmitted PDU are uniformly called a RLC data packet. Specifically, a RLC data packet is a RLC PDU from the MAC layer viewpoint. The RLC data packet or RLC PDU mentioned below may be the initially-transmitted AMD PDU, the retransmitted AMD PDU, or the segment of the retransmitted AMD PDU.

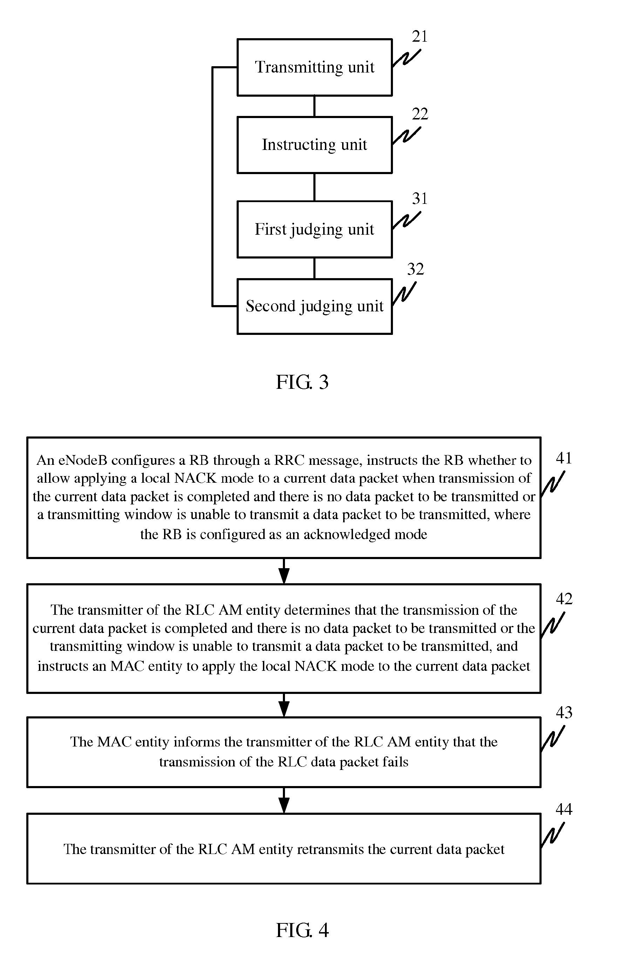

As shown in FIG. 3, the apparatus for retransmitting a data packet according to the embodiment of the present invention may further include:
a first judging unit 31, configured to judge, if the instructing unit 22 instructs the media access control entity to feed back that the transmission of the data packet fails through a local negative acknowledgement mode, whether there is a data packet to be transmitted or whether the transmitting window resumes transmission of a data packet to be transmitted; and
a second judging unit 32, configured to judge, when a judgment result of the first judging unit 31 is that there is no data packet to be transmitted or the transmitting window does not resume transmission of a data packet to be transmitted, and if a sequence number of the data packet cycles between 0 and X, whether the sequence number of the data packet is smaller than VT(S) and is equal to or greater than VT(A) when VT(A) is smaller than VT(S), or whether the sequence number of the data packet is smaller than X + 1 and is equal to or greater than VT(A) when VT(A) is greater than VT(S), or whether the sequence number of the data packet is smaller than VT(S) and is equal to or greater than 0 when VT(A) is greater than VT(S).

The transmitting unit 21 is further configured to retransmit the data packet when the judgment result of the second judging unit 32 is yes.

Illustratively, the sequence number of a data packet cycles between 0 and X.

When VT(A) < VT(S), and if the sequence number of the data packet is smaller than VT(S) and is equal to or greater than VT(A), the transmitting unit 21 retransmits the data packet;
or, when VT(A) > VT(S), and if the sequence number of the data packet is smaller than X + 1 and is equal to or greater than VT(A), or if the sequence number of the data packet is smaller than VT(S) and is equal to or greater than 0, the transmitting unit 21 retransmits the data packet.

Illustratively, the judgment result of the first judging unit 31 is that there is a data packet to be transmitted or the transmitting window resumes the transmission of a data packet to be transmitted may include: a new data packet from the upper layer reaching the transmitter of the radio link control acknowledged mode entity and being adding to the initial transmission buffer; or, a data packet which has been transmitted by the transmitter of the radio link control acknowledgement mode entity, and of which a NACK feedback is received, being added to the retransmission buffer; or, an initially-transmitted data packet free from the restriction of the transmitting window after the transmitter of the radio link control acknowledgement mode entity receiving a feedback from the receiver. For a SRB, the upper layer refers to the RRC layer; for a DRB, the upper layer refers to the PDCP layer.

Therefore, the apparatus for retransmitting a data packet according to embodiments of the present invention avoids repeatedly retransmitting a data packet caused by applying the local NACK mode to the RLC data packet when a data packet is to be transmitted or the transmitting window resumes transmission of a data packet to be transmitted.

In the apparatus for retransmitting a data packet according to embodiments of the present invention, the transmitting unit 21 may be further configured to receive a RRC message. The RRC message carries an indication of whether a first condition is supported. The first condition is to an indication of configuring whether a signaling radio bearer and/or a data radio bearer supports the first condition. The signaling radio bearer and/or the data radio bearer are an acknowledged mode. The first condition includes that: when the transmission of the data packet is completed, and there is no data packet to be transmitted or a transmitting window is unable to transmit a data packet to be transmitted, the transmitter instructs the media access control entity to feed back whether the transmission of the data packet fails through the local negative acknowledgement mode.

Illustratively, for details about the indication of whether the first condition is supported carried by the RRC message, see related descriptions of the method for retransmitting a data packet according to the embodiment shown in FIG. 1.

Similarly, for details about the RRC message that is used for configuring the indication of whether the first condition is supported, see related descriptions of the method for retransmitting a data packet according to the embodiment shown in FIG. 1.

Optionally, in the apparatus for retransmitting a data packet according to the embodiment of the present invention, if the RRC message carries an indication of supporting the first condition, the transmitting unit 21 may be further configured to receive an indication from the upper layer, and determine, according to the indication of the upper layer, whether to execute the first condition. For a SRB, the upper layer refers to the RRC layer; for a DRB, the upper layer refers to the PDCP layer.

That is, even though an RB or a UE is configured with the indication of supporting the first condition, the transmitter of the RLC AM entity needs to determine, according to the indication of the upper layer, whether to execute the first condition.

Optionally, in the apparatus for retransmitting a data packet according to embodiments of the present invention, the RRC message received by the transmitting unit 21 further carries an indication of whether a second condition is supported. The second condition is to determine, according to the indication of the upper layer, whether to execute the first condition. For a SRB, the upper layer refers to the RRC layer; for a DRB, the upper layer refers to the PDCP layer.

Optionally, whether determining, according to an indication of the upper layer, whether to execute a first condition is supported also needs to be configured through a RRC message. The configuration manner is the same as the manner of configuring through a RRC message an indication of whether a first condition is supported.

Illustratively, for details about an indication of whether a second condition is supported carried by the RRC message, see related descriptions of the method for retransmitting a data packet according to the embodiment shown in FIG. 1.

Similarly, for details about the RRC message that is used to configure the indication of whether a second condition is supported, see related descriptions of the method for retransmitting a data packet according to the embodiment shown in FIG. 1.

For details about the apparatus for retransmitting a data packet according to embodiments of the present invention and the composition of the apparatus, see related descriptions of the method for retransmitting a data packet according to the embodiment shown in FIG. 1.

A method for retransmitting a data packet according to another embodiment of the present invention includes:
transmitting a radio resource control message to a user equipment, where the radio resource control message carries an indication of whether a first condition is supported, where the first condition is: when transmission of a current data packet is completed, and there is no data packet to be transmitted or a transmitting window is unable to transmit a data packet to be transmitted, a transmitter of a radio link control acknowledged mode entity corresponding to a signaling radio bearer or a data radio bearer instructs a media access control entity to feed back whether the transmission of the current data packet fails through a local negative acknowledgement mode.

The entity for implementing the method for retransmitting a data packet according to this embodiment is an eNodeB (Evolution NodeB, evolution NodeB). The transmitter of the radio link control acknowledged mode entity is referred to as the transmitter of the RLC AM entity.

Specifically, the indication of whether the first condition is supported may include:
an indication of configuring whether a signaling radio bearer and/or a data radio bearer supports a first condition. The signaling radio bearer and/or the data radio bearer is in an acknowledge mode. The first condition includes: when the transmission of the data packet is completed, and there is no data packet to be transmitted or a transmitting window is unable to transmit a data packet to be transmitted, instructing, by the transmitter, the media access control entity to feed back whether the transmission of the data packet fails through the local negative acknowledgement mode.

Illustratively, in the method for retransmitting a data packet according to the embodiment of the present invention, an eNodeB may configure the indication of whether the first condition is supported through a RRC message to indicate whether each RB supports the first condition.

RBs may include SRBs and/or DRBs. That is, an indication of whether the first condition is supported may be configured for the SRB and the DRB, or an indication of whether the first condition is supported may be configured for the SRB or the DRB.

Or, an eNodeB may configure an indication of whether the first condition is supported for a UE through a RRC message. If the indication of whether the first condition is supported is configured for the UE, the indication of whether the first condition is supported is configured for all RBs of the UE. RBs may include SRBs and DRBs.

Or, it is unnecessary to perform the above configuration through a RRC message; instead, a protocol specifies whether the first condition is supported. The protocols may include the RLC protocol and MAC protocol.

Specifically, optionally, the RRC message used for configuring the indication of whether the first condition is support may include:
a RRC Connection Setup message, or a RRC Connection Reconfiguration message, or a RRC Connection Reestablishment message.

Optionally, the indication of whether the first condition is supported may be configured by using an existing parameter in the above messages, or a newly-added parameter, or a certain field in the existing parameter, or other manners.

In the method for retransmitting a data packet according to embodiments of the present invention, the radio resource control message further carries the indication of whether the second condition is supported. The second condition is to determine, according to an indication of an upper layer, whether to execute the first condition. The upper layer may include the RRC layer or the PDCP layer.

For a SRB, the upper layer refers to the RRC layer; for a DRB, the upper layer refers to the PDCP layer.

Illustratively, for details about an indication of whether a second condition is supported carried by the RRC message, see related descriptions of the method for retransmitting a data packet according to the embodiment shown in FIG. 1.

Similarly, for details about the RRC message that is used to configure the indication of whether a second condition is supported, see related descriptions of the method for retransmitting a data packet according to the embodiment shown in FIG. 1.

That is, whether the mechanism is supported also needs to be configured through RRC, where the mechanism is when the transmission of the current data packet is completed, and there is no data packet to be transmitted or a transmitting window is unable to transmit a data packet to be transmitted, instructing, according to the indication of the upper layer, the media access control entity to feed back whether the transmission of the current data packet fails through the local negative acknowledgement mode. The configuration manner is the same as the manner of configuring whether the following mechanism is supported through a RRC message: when the transmission of the current data packet is completed, and there is no data packet to be transmitted or a transmitting window is unable to transmit a data packet to be transmitted, the transmitter of a radio link control acknowledged mode entity instructs a media access control entity to feed back whether the transmission of the current data packet fails through the local negative acknowledgement mode.

For details about the method for retransmitting a data packet according to embodiments of the present invention and the composition of the apparatus, see related descriptions of the method for retransmitting a data packet according to the embodiment shown in FIG. 1.

It can be seen from the technical solution according to the embodiment of the present invention, in an AM of a SRB or a DRB, when the transmission of the data packet is completed, and there is no data packet to be transmitted or the transmitting window is unable to transmit a data packet to be transmitted, a local NACK mode is applied to a data packet, thereby not only avoiding transmission delay of the data packet, but also avoiding the repeatedly retransmitting the data packet caused by applying the local NACK mode to all data packets.

An apparatus for retransmitting a data packet according to another embodiment of the present invention includes:
a transmitting unit, configured to transmit a radio resource control message to a user equipment, where the radio resource control message carries an indication of whether a first condition is supported, where the first condition is: when transmission of a current data packet is completed, and there is no data packet to be transmitted or a transmitting window is unable to transmit a data packet to be transmitted, a transmitter of a radio link control acknowledged mode entity corresponding to a signaling radio bearer or a data radio bearer instructs a media access control entity to feed back whether the transmission of the current data packet fails through a local negative acknowledgement mode.

The apparatus for retransmitting a data packet according to this embodiment may be configured in an eNodeB. The transmitter of the radio link control acknowledged mode entity is called as the transmitter of the RLC AM entity.

Specifically, the indication of whether the first condition is supported may include:
an indication of configuring whether a signaling radio bearer and/or a data radio bearer supports a first condition. The signaling radio bearer and/or the data radio bearer is in an acknowledge mode. The first condition includes: when the transmission of the data packet is completed, and there is no data packet to be transmitted or a transmitting window is unable to transmit a data packet to be transmitted, instructing, by the transmitter, the media access control entity to feed back whether the transmission of the data packet fails through the local negative acknowledgement mode.

Illustratively, for details about an indication of a first condition is supported carried by the RRC message, see related descriptions of the method for retransmitting a data packet according to the embodiment shown in FIG. 1.

Similarly, for details about the RRC message that is used for configuring the indication of whether the first condition is supported, see related descriptions of the method for retransmitting a data packet according to the embodiment shown in FIG. 1.

Optionally, the radio resource control message transmitted by the transmitting unit further carries an indication of whether a second condition is supported. The second condition is to determine, according to an indication of the upper layer, whether to execute the first condition. The upper layer includes the radio resource control layer or the packet data convergence protocol layer.

Illustratively, for details about the RRC message carrying the indication of whether the second condition is supported, see related descriptions of the method for retransmitting a data packet according to the embodiment shown in FIG. 1.

Similarly, for details about the RRC message that is used for configuring the indication of whether the second condition is supported, see related descriptions of the method for retransmitting a data packet according to the embodiment shown in FIG. 1.

For details about the apparatus for retransmitting a data packet according to the embodiment of the present invention and the composition of the apparatus, see related descriptions of the apparatus for retransmitting a data packet according to the embodiments shown in FIG. 2 and FIG. 3.

It can be seen from the technical solution according to the embodiment of the present invention, in an AM of a SRB or a DRB, when the transmission of the data packet is completed, and there is no data packet to be transmitted or the transmitting window is unable to transmit a data packet to be transmitted, a local NACK mode is applied to a data packet, thereby not only avoiding transmission delay of the data packet, but also avoiding the repeatedly retransmitting the data packet caused by applying the local NACK mode to all data packets.

As shown in FIG. 4, a method for retransmitting a data packet according to embodiments of the present invention is described with reference to an application scenario in the following. The method includes:
41. An eNodeB configures a RB through a RRC message, instructs the RB whether to allow applying a local NACK mode to a current data packet when transmission of the current data packet is completed and there is no data packet to be transmitted or a transmitting window is unable to transmit a data packet to be transmitted, where the RB is configured as an acknowledged mode.

Illustratively, the eNodeB respectively configures the RBs which apply the local NACK mode to the current data packet through a RRC message, to indicate the configuration attribute of each RB. That is, RBs (including SRBs and/or DRBs) all support to apply the local NACK mode to the current data packet when the transmission of the current data packet (such as a RLC PDU) is completed and there is no data packet to be transmitted or a transmitting window is unable to transmit a data packet to be transmitted.

Or, an eNodeB configures a UE which applies a local NACK mode to the current data packet through a RRC message. That is, all RBs (including SRBs and/or DRBs) configured as the acknowledged mode of the UE support to apply the local NACK mode to the current data packet when the transmission of the current data packet (such as a RLC PDU) is completed and there is no data packet to be transmitted or a transmitting window is unable to transmit a data packet to be transmitted.

Or, when the transmission of the current data packet (such as a RLC PDU) is completed and there is no data packet to be transmitted or a transmitting window is unable to transmit a data packet to be transmitted, the protocol defines that a local NACK mode is applied to the current data packet, rather than configuring through a RRC message.

The RRC message used for configuring the local NACK mode may include but is not limited to a RRC Connection Setup message, a RRC Connection Reconfiguration message, or a RRC Connection Reestablishment message. Optionally, the configuration may be implemented by using an existing parameter in the above messages, or a newly-added parameter, or a certain field in the existing parameter, or other manners.
42. The transmitter of the RLC AM entity determines that the transmission of the current data packet is completed and there is no data packet to be transmitted or the transmitting window is unable to transmit a data packet to be transmitted, and instructs an MAC entity to apply the local NACK mode to the current data packet.

Optionally, during a data transmission process, when the transmitter of a RLC AM entity assembles an AMD PDU or a segment of an AMD PDU, and if the transmitter of the RLC AM entity detects that the initial transmission buffer and the retransmission buffer (the retransmission buffer does not contain a transmitted data packet waiting for acknowledgment of the ARQ mode) are empty after completes the transmission of the assembled AMD PDU or the assembled segment of the AMD PDU, that is, the assembled AMD PDU or the segment of the AMD PDU is the last data packet to be transmitted, the transmitter of the RLC AM entity judges whether the RB to which the assembled data packet belongs is configured with the local NACK mode. If the RB is configured with the local NACK mode, the transmitter of the RLC AM entity informs the MAC entity to apply the local NACK mode to the assembled AMD PDU or the assembled segment of the AMD PDU.

Optionally, during the data transmission process, when the transmitter of a RLC AM entity assembles an AMD PDU or a segment of an AMD PDU, and if the transmitter of the RLC AM entity detects that a new data packet cannot be transmitted because of a transmitting window restriction after the assembled AMD PDU or the assembled segment of the AMD PDU is transmitted, the transmitter judges whether the RB to which the assembled data packet belongs is configured with the local NACK mode. If the RB is configured with the local NACK mode, the transmitter of the RLC AM entity informs the MAC entity to apply the local NACK mode to the assembled AMD PDU or the assembled segment of the AMD PDU.
43. The MAC entity informs the transmitter of the RLC AM entity that the transmission of the RLC data packet fails.

If the MAC entity receives an indication of applying the local NACK to a MAC SDU (namely, a RLC data packet), the MAC entity determines an HARQ process corresponding to a MAC PDU carrying the MAC SDU. If the HARQ process determines that the maximum transmission times of the MAC PDU has been reached, and the last HARQ feedback is a NACK, that is, the feedback of the last HARQ transmission corresponding to the HARQ process is a NACK which represents that the data packet transmission fails, the MAC entity informs the transmitter of the RLC AM entity which transmits the indication of the local NACK that the transmission of the RLC data packet fails.
44. The transmitter of the RLC AM entity retransmits the current data packet.

When receiving an HARQ error indication of a certain AMD PDU or a segment of an AMD PDU from the MAC entity, that is, an indication of the transmission of the RLC data packet failing, the transmitter of the RLC AM entity first checks whether there is data that can be transmitted currently. If there is data that can be transmitted currently, the transmitter of the RLC AM entity ignores the HARQ error indication; otherwise, the transmitter of the RLC AM entity checks the SN of the AMD PDU or the segment of the AMD PDU, and if the SN, VT(A), and VT(S) meet a transmission condition, the transmitter of the RLC AM entity retransmits the AMD PDU or the segment of the AMD PDU.

Specifically, the scenarios for judging whether there is a RLC PDU that can be transmitted currently include the following:
a new data packet from the upper layer reaching the transmitter of the radio link control acknowledgement mode entity, and being added to the initial transmission buffer;
or, a NACK feedback being received for a data packet which has been transmitted by the transmitter of the radio link control acknowledgement mode entity, and the data packet being added to the retransmission buffer;
or, an initially-transmitted data packet free from the restriction of the transmitting window after the transmitter of the radio link control acknowledgement mode entity receives a feedback from the receiver.

Specifically, because the SN of the AMD PDU or the segment of the AMD PDU is cyclically numbered between 0 and 1023, the SN of the data packet, VT(A), and VT(S) meet the transmission condition may include:
when VT(A) < VT(S), and if VT(A) <= SN < VT(S), the transmitter of the RLC AM entity retransmits the AMD PDU or the segment of the AMD PDU;
when VT(A) > VT(S), and if VT(A) <= SN < 1024 || 0 <= SN < VT(S), the transmitter of the RLC AM entity retransmits the AMD PDU or the segment of the AMD PDU.

Optionally, when the transmitter of the RLC entity receives an HARQ error indication for an AMD PDU or a segment of an AMD PDU from the MAC entity, that is, an indication of the transmission the RLC data packet failing, and judges that there is no data packet to be transmitted, the transmitter may directly retransmit the AMD PDU or the segment of the AMD PDU without judging whether the SN of the AMD PDU or the segment of the AMD PDU, VT(A), and VT(S) meet the transmission condition.

Optionally, when receiving an HARQ error indication for an AMD PDU or a segment of an AMD PDU from the MAC entity, that is, an indication of the RLC data packet failing, the transmitter of the RLC entity does not check whether there is a RLC data packet that can be transmitted currently, but directly judges whether the SN of the AMD PDU or the segment of the AMD PDU, VT(A), and VT(S) meet the transmission condition. If the SN of the AMD PDU or the segment of the AMD PDU, VT(A), and VT(S) meet the transmission condition, the transmitter of the RLC entity may retransmit the data packet; if the SN of the AMD PDU or the segment of the AMD PDU, VT(A), and VT(S) do not meet the transmission condition, the transmitter of the RLC entity ignores the indication.

In the method for retransmitting a data packet according to embodiments of the present invention, RB refers to a bearer in an acknowledged mode.

It can be seen from the technical solution according to the embodiment of the present invention, when transmission of the current data packet is completed, and there is no data packet to be transmitted or the transmitting window is unable to transmit a data packet to be transmitted, a local NACK mode is applied to the current data packet, thereby not only avoiding transmission delay of the data packet, but also avoiding the repeatedly retransmitting the data packet caused by directly applying the local NACK mode.

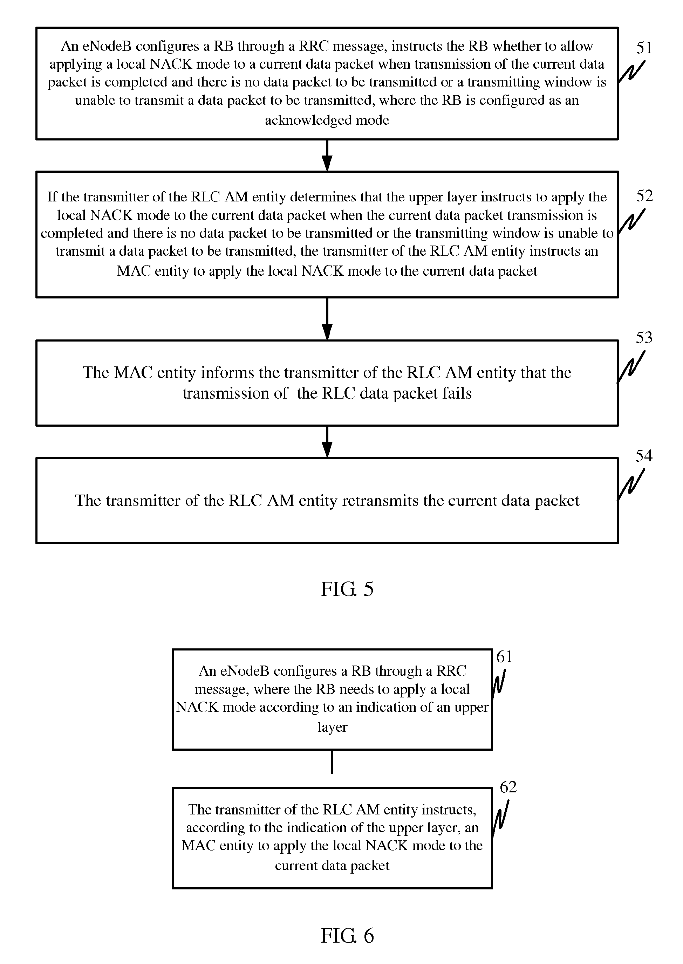

As shown in FIG. 5, the method for retransmitting a data packet according to an embodiment of the present invention differs from the method for retransmitting a data packet shown in FIG. 4 in that:
even though a RB or a UE is configured with a mechanism for applying a local NACK mode to the current data packet when the transmission of the current data packet is completed and there is no data packet to be transmitted or the transmitting window is unable to transmit a data packet to be transmitted, the transmitter of the RLC AM entity still needs to determine, according to an indication of an upper layer, whether to apply the local NACK mode to the current data packet.

For other contents of the method for retransmitting a data packet according to this embodiment of the present invention, see corresponding contents of the method for retransmitting a data packet shown in FIG. 4.

The following describes a method for retransmitting a data packet according an embodiment of the present invention with reference to an application scenario. The method includes:
51. An eNodeB configures a RB through a RRC message, instructs the RB whether to allow applying a local NACK mode to a current data packet when transmission of the current data packet is completed and there is no data packet to be transmitted or a transmitting window is unable to transmit a data packet to be transmitted, where the RB is configured as an acknowledged mode.

Illustratively, the eNodeB respectively configures the RBs which apply the local NACK mode to the current data packet through a RRC message, to indicate the configuration attribute of each RB. That is, RBs (including SRBs and/or DRBs) are all support to apply the local NACK mode to the current data packet when the transmission of the current data packet (such as a RLC PDU) is completed and there is no data packet to be transmitted or a transmitting window is unable to transmit a data packet to be transmitted.

Or, an eNodeB configures a UE which applies a local NACK mode to the current data packet through a RRC message. That is, all RBs (including SRBs and/or DRBs) configured as the acknowledged mode of the UE support to apply the local NACK mode to the current data packet when the transmission of the current data packet (such as a RLC PDU) is completed and there is no data packet to be transmitted or a transmitting window is unable to transmit a data packet to be transmitted.

Or, when the transmission of the current data packet (such as a RLC PDU) is completed and there is no data packet to be transmitted or a transmitting window is unable to transmit a data packet to be transmitted, the protocol defines that a local NACK mode is applied to the current data packet, rather than configuring through a RRC message.

Optionally, whether the mechanism is supported also needs to be configured through RRC, where the mechanism is when the transmission of the current data packet is completed, and there is no data packet to be transmitted or a transmitting window is unable to transmit a data packet to be transmitted, instructing, according to the indication of the upper layer, the media access control entity to feed back whether the transmission of the current data packet fails through the local negative acknowledgement mode. The configuration manner is the same as the manner of configuring whether the following mechanism is supported through a RRC message: when the transmission of the current data packet is completed, and there is no data packet to be transmitted or a transmitting window is unable to transmit a data packet to be transmitted, the transmitter of a radio link control acknowledged mode entity instructs a media access control entity to feed back whether the transmission of the current data packet fails through the local negative acknowledgement mode.
52. If the transmitter of the RLC AM entity determines that the upper layer instructs to apply the local NACK mode to the current data packet when the current data packet transmission is completed and there is no data packet to be transmitted or the transmitting window is unable to transmit a data packet to be transmitted, the transmitter of the RLC AM entity instructs an MAC entity to apply the local NACK mode to the current data packet.

For a SRB, the upper layer refers to the RRC layer; for a DRB, the upper layer refers to the PDCP layer.

That is, if the upper layer instructs that one upper layer data packet (namely, a RLC SDU) applies the local NACK mode, the transmitter of the RLC AM entity applies the local NACK mode to the last RLC PDU that contains all or partial data of the RLC SDU. If the upper layer instructs that one upper layer data packet (namely, a RLC SDU) does not apply the local NACK mode, the transmitter of the RLC AM entity does not apply the local NACK mode even though the transmitter of the RLC AM entity determines that the RLC PDU containing all or partial data of the RLC SDU is the last data packet.

Optionally, during a data transmission process, if the upper layer instructs that one upper layer data packet (namely, a RLC SDU) applies the local NACK mode, and when the transmitter of a RLC AM entity assembles an AMD PDU or a segment of an AMD PDU, and detects that the initial transmission buffer and retransmission buffer (the retransmission buffer does not contain a transmitted data packet waiting for acknowledgment of the ARQ) are empty after the assembled AMD PDU or the assembled segment of the AMD PDU is transmitted, that is, the assembled AMD PDU or the assembled segment of the AMD PDU is the last data packet to be transmitted, the transmitter of the RLC AM entity informs the MAC entity to apply the local NACK mode to the assembled AMD PDU or the assembled segment of the AMD PDU.

Optionally, during the data transmission, if the upper layer instructs that one upper layer data packet (namely, a RLC SDU) applies the local NACK mode, when the transmitter of a RLC AM entity assembles an AMD PDU or a segment of an AMD PDU, and detects that a new data packet cannot be transmitted because of a transmitting window restriction after the assembled AMD PDU or the assembled segment of the AMD PDU is transmitted, the transmitter of the RLC AM entity applies the local NACK mode to the assembled AMD PDU or the assembled segment of the AMD PDU.
53. The MAC entity informs the transmitter of the RLC AM entity that the transmission of the RLC data packet fails.

For details about this step, see related contents of the method for retransmitting a data packet shown in FIG. 4.
54. The transmitter of the RLC AM entity retransmits the current data packet.

For details about this step, see related contents of the method for retransmitting a data packet shown in FIG. 4.

In the method for retransmitting a data packet according to embodiments of the present invention, a RB refers to a bearer in an acknowledged mode.

It can be seen from the technical solution according to the embodiment of the present invention, when transmission of a current data packet is completed, and there is no data packet to be transmitted or the transmitting window is unable to transmit a data packet to be transmitted, a local NACK mode is applied to the current data packet, thereby not only avoiding transmission delay of the data packet, but also avoiding the repeatedly retransmitting the data packet caused by directly applying the local NACK mode.

As shown in FIG. 6, the method for retransmitting a data packet according to an embodiment of the present invention differs from the method for retransmitting a data packet shown in FIG. 4 in that:
an eNodeB configures a RB through a RRC message, and instructs the RB whether to allow applying a local NACK mode according to an indication of the upper layer, wherein the RB needs to apply the local NACK mode according to the indication of the upper layer.

The following describes a method for retransmitting a data packet according to an embodiment of the present invention with reference to an application scenario. The method includes:
61. An eNodeB configures a RB through a RRC message, where the RB needs to apply a local NACK mode according to an indication of an upper layer.

For a SRB, the upper layer refers to the RRC layer; for a DRB, the upper layer refers to the PDCP layer.

Optionally, the eNodeB respectively configures RBs through the RRC message to indicating the RB whether to allow applying the local NACK mode according to the indication of the upper layer, that is, the indication is one of the configuration attributes of each RB, where the RBs need to apply the local NACK mode according to an indication of the upper layer.

Optionally, the eNodeB configures a UE through a RRC message to indicate the UE whether to allow applying the local NACK mode according to the indication of the upper layer, that is, the indication is a configuration attribute of the UE, and all RBs (including SRBs and DRBs) of the UE need to apply the local NACK mode, where the UE needs to apply a local NACK mode according to the indication of the upper layer.

Optionally, the protocol defines that the local NACK mode is applied according to the indication of the upper layer, rather than configuring through a RRC message is not needed.

For details about the RRC message used for configuring this mode, see related contents of the method for retransmitting a data packet shown in FIG. 4.
62. The transmitter of the RLC AM entity instructs, according to the indication of the upper layer, an MAC entity to apply the local NACK mode to the current data packet.

Optionally, if the upper layer instructs to apply the local NACK mode to an upper layer data packet (namely, a RLC SDU), the transmitter of the RLC AM entity performs steps 43 and 44 shown in FIG. 4 on all RLC PDUs that contain all or partial data of the RLC SDU.

If the upper layer instructs that an upper layer data packet (namely, a RLC SDU) does not apply the local NACK mode, the transmitter of the RLC AM entity does not apply the local NACK mode to any RLC PDU that contains all or partial data of the RLC SDU.

Or, if the upper layer instructs that the upper layer data packet (namely, a RLC SDU) does not apply the local NACK mode, the transmitter of the RLC AM entity performs steps 43 and 44 shown in FIG. 4 only on the last RLC PDU that contains all or partial data of the RLC SDU.

In the method for retransmitting a data packet according to embodiments of the present invention, RB refers to a bearer in an acknowledged mode.

It can be seen from the technical solutions according to the embodiment of the present invention, when the transmission of the current data packet is completed, and there is no data packet to be transmitted or the transmitting window is unable to transmit a data packet to be transmitted, a local NACK mode is applied to the current data packet, thereby not only avoiding transmission delay of the data packet, but also avoiding the repeatedly retransmitting the data packet caused by directly applying the local NACK mode.

Persons of ordinary skill in the art should understand that all or a part of the steps of the method according to the embodiments may be implemented by a computer program instructing relevant hardware. The program may be stored in a computer readable storage medium. When the program is running, the steps of the method according to the embodiments are performed. The storage medium may be a magnetic disk, an optical disk, a read-only memory (Read-Only Memory, ROM), or a random access memory (Random Access Memory, RAM).

The above descriptions are merely exemplary embodiments of the present invention, but the protection scope of the present invention is not limited thereto. Any modification or replacement that can be easily thought of by persons skilled in the art without departing from the technical scope of the present invention shall fall within the protection scope of the present invention. Therefore, the protection scope of the present invention is subject to the protection scope of the claims.

## Claims

1. A method for retransmitting a data packet, comprising:
transmitting, by a transmitter, a data packet;
when the transmitter determines that transmission of the data packet is completed, and there is no data packet to be transmitted or a transmitting window is unable to transmit a data packet to be transmitted, instructing, by the transmitter, a media access control entity to feed back whether the transmission of the data packet fails through a local negative acknowledgement mode; and
if the transmitter receives that the media access control entity feeds back that the transmission of the data packet fails through the local negative acknowledgement mode, retransmitting, by the transmitter, the data packet.

2. The method according to claim 1, wherein if the transmitter instructs the media access control entity to feed back the transmission of the data packet fails through the local negative acknowledgement mode, the method further comprises:
judging, by the transmitter, whether there is a data packet to be transmitted or whether the transmitting window resumes transmission of a data packet to be transmitted; and
if there is no data packet to be transmitted or the transmitting window does not resume the transmission of the data packet to be transmitted, when a sending state variable VT(A) of the transmitter is smaller than an acknowledgement state variable VT(S) of the transmitter, and when the transmitter determines that a sequence number of the data packet is smaller than the VT(S) and is equal to or greater than the VT(A), retransmitting, by the transmitter, the data packet; or when VT(A) is greater than VT(S), and when the transmitter determines that a sequence number of the data packet is smaller than X + 1 and is equal to or greater than the VT(A), or that the sequence number of the data packet is smaller than the VT(S) and is equal to or greater than 0, retransmitting, by the transmitter, the data packet;
where the sequence number of the data packet cycles between 0 and X.

3. The method according to claim 1, wherein before the transmitter transmits the data packet, the method further comprises:
receiving a radio resource control message, where the radio resource control message carries an indication of whether a first condition is supported, where the indication of whether the first condition is supported comprises:
an indication of configuring whether a signaling radio bearer and/or a data radio bearer supports the first condition, wherein the signaling radio bearer and/or the data radio bearer is in an acknowledged mode, and the first condition comprises: when the transmission of the data packet is completed, and there is no data packet to be transmitted or the transmitting window is unable to transmit the data packet to be transmitted, instructing, by the transmitter, the media access control entity to feed back whether the transmission of the data packet fails through the local negative acknowledgement mode.

4. The method according to claim 3, wherein if the radio resource control message carries an indication of supporting the first condition, the method further comprises:
receiving an indication from an upper layer, and determining, according to the indication of the upper layer, whether to execute the first condition, where the upper layer comprises a radio resource control layer or a packet data convergence protocol layer.

5. The method according to claim 3, wherein the received radio resource control message further carries an indication of whether a second condition is supported, wherein the second condition is to determine, according to an indication of an upper layer, whether to execute the first condition, the upper layer comprises a radio resource control layer or a packet data convergence protocol layer.

6. An apparatus for retransmitting a data packet, comprising:
a transmitting unit, configured to transmit a data packet; and
an instructing unit, configured to instruct a media access control entity to feed back whether transmission of the data packet fails through a local negative acknowledgement mode when determining that the transmitting unit completes the transmission of the data packet, and there is no data packet to be transmitted or a transmitting window is unable to transmit a data packet to be transmitted, where
the transmitting unit is further configured to retransmit the data packet when receiving that the media access control entity instructed by the instructing unit feeds back that the transmission of the data packet fails.

7. The apparatus according to claim 6, further comprising:
a first judging unit, configured to judge whether there is a data packet to be transmitted or whether the transmitting window resumes transmission of a data packet to be transmitted if the instructing unit instructs the media access control entity to feed back the transmission of the data packet fails through the local negative acknowledgement mode; and
a second judging unit, configured to, when a judgment result of the first judging unit is that there is no data packet to be transmitted or the transmitting window does not resume the transmission of the data packet to be transmitted, if a sequence number of the data packet cycles between 0 and X, judge whether the sequence number of the data packet is smaller than VT(S) and is equal to or greater than VT(A) when the VT(A) is smaller than the VT(S), or judge whether the sequence number of the data packet is smaller than X + 1 and is equal to or greater than VT(A) when the VT(A) is greater than the VT(S), or judge whether the sequence number of the data packet is smaller than VT(S) and is equal to or greater than 0 when the VT(A) is greater than the VT(S), where
the transmitting unit is further configured to retransmit the data packet when the second judging unit determines that the sequence number of the data packet is smaller than the VT(S) and is equal to or greater than the VT(A), or the sequence number of the data packet is smaller than the X + 1 and is equal to or greater than the VT(A), or the sequence number of the data packet is smaller than the VT(S) and is equal to or greater than 0.

8. The apparatus according to claim 6, wherein the transmitting unit is further configured to receive a radio resource control message, where the radio resource control message carries an indication of whether a first condition is supported, wherein the first condition is an indication of configuring whether a signaling radio bearer and/or a data radio bearer supports the first condition, the signaling radio bearer and/or the data radio bearer is in an acknowledged mode, and the first condition comprises: when transmission the data packet is completed, and there is no data packet is to be transmitted or the transmitting window is unable to send the data packet to be transmitted, instructing, by the transmitter, the media access control entity to feed back whether the transmission of the data packet fails through the local negative acknowledgement mode.

9. The apparatus according to claim 8, wherein if the radio resource control message carries an indication of supporting the first condition, the transmitting unit is further configured to receive an indication from an upper layer, and determine, according to the indication of the upper layer, whether to execute the first condition, the upper layer comprising a radio resource control layer or a packet data convergence protocol layer.

10. The apparatus according to claim 8, wherein the radio resource control message received by the transmitting unit further carries an indication of whether a second condition is supported, wherein the second condition is to determine, according to an indication from an upper layer, whether to execute the first condition, the upper layer comprises a radio resource control layer or a packet data convergence protocol layer.
